# EUROPEAN PATENT APPLICATION

(11) **EP 4 730 426 A1**
(43) Date of publication of application: **22.04.2026**
(21) Application number: 24825205.8
(22) Date of filing: 17.06.2024
(51) Int. Cl.: H01M 4/36, H01M 4/38, H01M 4/587, H01M 4/134, H01M 4/04, H01M 10/0525

(54) **SILICON-CARBON NEGATIVE ELECTRODE MATERIAL AND PREPARATION METHOD THEREFOR, NEGATIVE ELECTRODE SHEET AND LITHIUM-ION BATTERY**

(30) Priority: 19.06.2023 CN 202310724922
(71) Applicant: Sinosteel Advanced Materials (Zhejiang) Co., Ltd., Huzhou, Zhejiang 313100 (CN)
(72) Inventor: WU, Houzheng, Huzhou, Zhejiang 313100 (CN); HU, Mengfei, Huzhou, Zhejiang 313100 (CN)
(74) Representative: Viering, Jentschura & Partner mbB Patent- und Rechtsanwälte
(86) International application number: PCT/CN2024/099616
(87) International publication number: WO 2024/260310

(57) **Abstract**

A silicon-carbon negative electrode material and a preparation method therefor, a negative electrode sheet and a lithium-ion battery. The silicon-carbon negative electrode material comprises a graphite framework and silicon particles, wherein the graphite framework is formed into a card house structure having a cavity, and the silicon particles are contained in the cavity of the graphite framework. The silicon-carbon negative electrode material overcomes agglomeration of silicon particles under a high load, and improves the gram capacity and cycling stability of a negative electrode.

## Description

The present application claims the priority of China Patent Application No.202310724922.6 filed on June 19, 2023, and the full text of the China Patent Application is incorporated herein by reference as a part of the present application.

### TECHNICAL FIELD

The present disclosure relates to a silicon-carbon negative electrode material with high capacity and high cycling stability and a preparing method thereof, a negative electrode plate containing the silicon-carbon negative electrode material and a lithium ion battery.

### BACKGROUND

Graphite is a widely used battery negative electrode material, but its theoretical gram capacity (capacity per gram) is low, only 372 mAh/g, and after years of research and development, the actual gram capacity of commercial graphite negative electrode material is close to its theoretical value, so it is difficult to further improve it. Compared with graphite, silicon has a very high theoretical gram capacity, reaching 4200 mAh/g (calculated by the formation of Li₂₂Si₅), and the lithium intercalation potential is close to that of graphite, so that silicon-carbon negative electrode materials have attracted attention.

In order to achieve the high gram capacity of the electrode, it is considered to increase the silicon content in the silicon-carbon negative electrode material. However, the volume expansion of silicon will exceed 300% when it is completely lithiated, which will lead to the pulverization of silicon particles, and eventually the reversible capacity of silicon-containing negative electrode materials will be rapidly attenuated, and the cycling stability of the electrode will be poor. In addition, in the current practical application, the silicon-carbon negative electrode is still a simple combination of silicon and graphite. However, because the common graphite particles (natural graphite and artificial graphite) do not have rich cavities with appropriate sizes, they can't provide enough space to accommodate silicon, which leads to that silicon can only adhere to the graphite surface and is easy to agglomerate, which further affects the cycling stability of the battery negative electrode material. Therefore, facing the further requirements of application scenarios to improve the gram capacity of negative electrode materials, it has become a common technical challenge for the industry to develop battery negative electrode material with high capacity and high cycling stability.

### SUMMARY

In view of the problems existing in the existing art, the inventor(s) of the present disclosure have conducted in-depth research and found that, for a silicon-carbon negative electrode material, by forming a graphite framework having a card house structure and encapsulating silicon particles within the cavities of the graphite framework, it is possible not only to substantially increase the silicon content and thereby significantly enhance the gram capacity, but also to effectively suppress agglomeration of the silicon particles, thus improving the stability of the negative electrode material.

A first aspect of the present disclosure provides a silicon-carbon negative electrode material, which includes a graphite framework and silicon particles, the graphite framework has a card house structure with cavities, and the silicon particles are contained within the cavities of the graphite framework.

The term "card house structure" as used in the present disclosure refers to a three-dimensional structure formed by intercrossing and interlocking of multiple sheet-like crystalline units, thereby defining multiple semi-open cavities. The silicon particles are accommodated in these semi-open cavities.

The graphite framework formed with the card house structure exhibits high structural stability and abundant cavities. These cavities serve as spaces for accommodating the silicon particles, effectively preventing agglomeration of the silicon particles, providing sufficient space for volume expansion of the silicon particles, while maintaining physical contact between silicon and graphite, thereby effectively improving negative electrode performance. Using the silicon-carbon negative electrode material of the present disclosure, a negative electrode with good cycling stability can be formed even under high silicon content.

An average pore size of the cavities formed by the graphite framework ranges from 5 nm to 2000 nm, more preferably, the average pore size of the cavities formed by the graphite framework ranges from 30 nm to 500 nm.

By forming the cavities of the graphite framework within the above-mentioned size range, sufficient space can be provided for storage of silicon particles and for their volume expansion during charging/discharging, while effectively preventing agglomeration of the silicon particles.

A median particle size of the silicon particles ranges from 1 nm to 500 nm, preferably, the median particle size of the silicon particles ranges from 50 nm to 200 nm. By employing such silicon particles, the silicon particles can be well accommodated within the cavities of the graphite framework.

In the silicon-carbon negative electrode material of the present disclosure, the silicon particles account for 1% to 80% of a total mass of the silicon-carbon negative electrode material. Thereby, the silicon content can be flexibly adjusted according to specific requirements to provide appropriate gram capacity, while ensuring cycling stability even when the silicon content is as high as 80%.

Another aspect of the present disclosure provides a preparing method of a silicon-carbon negative electrode material, which at least includes the following steps: a calcination step: calcining a carbide to generate a graphite framework having a card house structure; and a silicon particle attachment step: attaching silicon particles into the cavities of the graphite framework obtained in the graphite-framework generation step, thereby obtaining the silicon-carbon negative electrode material.

The graphite framework with a card house structure can be generated by calcining a carbide. The calcination temperature for the carbide ranges from 2000 °C to 3300 °C, and a calcination duration is at least 1 h, preferably 2 h to 20 h.

The carbide may include at least one selected from the group consisting of silicon carbide, iron carbide, calcium carbide, molybdenum carbide, aluminum carbide, titanium-aluminum carbide, and titanium-silicon carbide.

In the silicon particle attachment step, the graphite framework as obtained and the silicon particles are mixed by a mechanical method, or the silicon particles are attached into the cavities of the graphite framework by a method of in-situ growth.

According to the preparing method of the silicon-carbon negative electrode material of the present disclosure, a carbide is used as a precursor, and non-carbon elements in the carbide precursor are removed through heat treatment such as calcination, thereby forming derived graphite (CDG) with a card house structure and a high degree of graphitization. By using such derived graphite formed from the carbide to construct the graphite framework for supporting the silicon particles, the amount of silicon added can be significantly increased while preventing the agglomeration of the silicon particles, thereby achieving simultaneous improvement in the gram capacity and the cycling stability of the silicon-carbon negative electrode material.

Another aspect of the present disclosure provides a negative electrode plate, which at least includes the silicon-carbon negative electrode material of the present disclosure. The present disclosure also provides a lithium-ion battery including the negative electrode plate of the present disclosure.

According to the present disclosure, problems existing in currently commercialized silicon-carbon negative electrode materials, such as low silicon content, tendency to agglomerate, large volume expansion, and poor cycling performance of the electrode, can be addressed.

### BRIEF DESCRIPTION OF DRAWINGS

Fig. 1 is a schematic diagram showing a structure of a silicon-carbon negative electrode material of the present disclosure.
Fig. 2 is a scanning electron microscope diagram of a graphite with a card house structure in Embodiment 1 of the present disclosure.
Fig. 3 is a scanning electron microscope diagram of a silicon-carbon negative electrode material according to Embodiment 1 of the present disclosure.
Fig. 4 is an XRD spectrum of the graphite framework obtained in Embodiment 1 of the present disclosure.
Fig. 5 is a Raman spectrum of the graphite framework obtained in Embodiment 1 of the present disclosure.

Description of the reference numerals
1-graphite framework;
2-silicon particle;
3-cavity.

### DETAILED DESCRIPTION

Hereinafter, the silicon-carbon negative electrode material of the present disclosure and the preparing method thereof will be further described in detail with the attached drawings and specific embodiments.

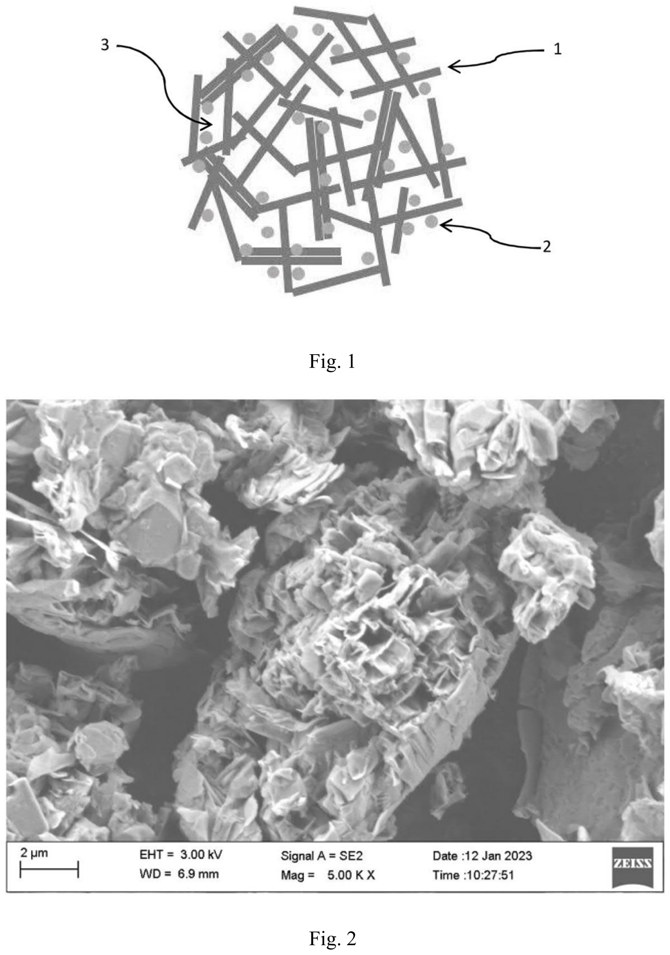

A first embodiment of the present disclosure provides a silicon-carbon negative electrode material. As shown in the schematic diagram of Fig. 1, the silicon-carbon negative electrode material includes a graphite framework 1 and silicon particles 2. The graphite framework 1 is formed by the aggregation of a plurality of sheet-like graphite crystals, and the sheet-like graphite crystals intercross and interlock with each other to form a three-dimensional framework structure, that is, a so-called card house structure. A large number of semi-open cavities 3 exist within the card house structure, and the silicon particles 2 are contained in the cavities 3 of the graphite framework 1.

Fig. 2 is a scanning electron microscope photograph of the graphite framework of the present disclosure. As shown in Fig. 2, the graphite framework itself is particulate in form, and each particle has a card house structure in which a plurality of sheet-like graphite crystals are aggregated to form a plurality of cavities.

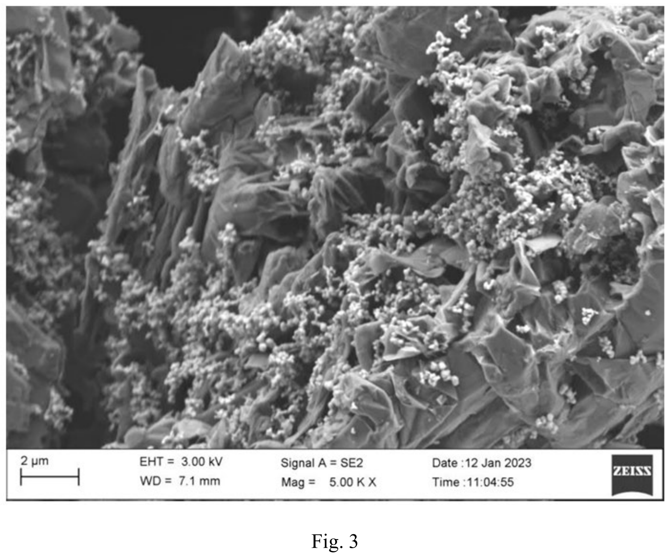

Fig. 3 is a scanning electron microscope photograph of the silicon-carbon negative electrode material of the present disclosure. As shown in Fig. 3, the silicon particles are embedded in the cavities of the graphite framework of the card house structure.

The cavities in the card house structure is a semi-open irregular space composed of multiple sheet-like graphite crystal which are staggered. The terms "silicon particles are contained in the cavities of the graphite framework", "silicon particles are embedded in the cavities of the graphite framework" and similar descriptions in the present disclosure are not limited to the case that the silicon particles completely enter the cavities, but also include the case that the silicon particles are attached to any one of the sheet-like graphite crystal constituting the cavities.

The particle size of the graphite framework is basically determined by the particle size of carbide precursor. Preferably, the median particle size of the graphite framework ranges from 1 µm to 50 µm, and further preferably ranges from 5 µm to 30 µm.

Preferably, an average pore size of the cavities existing in the graphite framework ranges from 5 nm to 2000 nm, preferably, the average pore size of the cavities existing in the graphite framework ranges from 30 nm to 500 nm, and even more preferably, the average pore size of the cavities existing in the graphite framework ranges from 100 nm to 300 nm.

A median particle size of the silicon particles preferably ranges from 1 nm to 500 nm, further preferably, the median particle size of the silicon particles ranges from 30 nm to 200 nm, and even more preferably, the median particle size of the silicon particles ranges from 50 nm to 120 nm.

The median particle size of the present disclosure is measured by the D50 value of powder particle size measured by a laser particle size meter, which indicates that the number of the particles with the median particle size in the particles accounts for 50% of the total particle size. The average pore size of the present disclosure refers to the average equivalent pore size, that is, taking the equivalent circle of the polygonal cross section of the cavities as a benchmark and the diameter of the equivalent circle as the pore size of the cavity. The average pore size can be measured by nitrogen adsorption and desorption or scanning electron microscope analysis.

By adopting such a graphite framework with a card house structure to contain the silicon particles, the silicon particles can be better embedded in the cavities of the graphite framework. Using a large number of semi-enclosed spaces in the card house structure to accommodate the silicon particles can not only effectively prevent the agglomeration of the silicon particles, but also provide physical confinement for the volume expansion of silicon and reduce the adverse impact on the electrode performance.

A second embodiment of the present disclosure provides a preparing method of a silicon-carbon negative electrode material.

The preparing method preferably includes the following steps.

Step 1: obtaining a carbide precursor, namely carrying out crushing grinding on a carbide coarse material to obtain carbide precursor powder.

By adjusting a ball-to-material ratio and grinding duration, the carbide precursor powder with the particle size ranging from 1 µm to 50 µm is obtained, and the more preferable particle size ranges from 5 µm to 30 µm. Commercially available carbide powder can also be used.

Step 2: a calcination step: calcining the carbide precursor powder to form a graphite framework having a card house structure.

Step 3: a silicon particle attachment step: attaching the silicon particles into the graphite framework obtained in step 2 to form a silicon-carbon negative electrode material.

By calcining the carbide, non-carbon elements sublimate and escape, leaving a graphite framework with a three-dimensional frame structure, that is, the card house structure. Its structural characteristics are that graphite crystal sheets are intertwined with each other to form a large number of semi-enclosed spaces (cavities) with sub-micron to micron dimensions. In order to ensure the capacity and first cycle efficiency of the finally formed electrode material, the graphitization degree after calcination is preferably > 70%.

The main factors affecting the microstructure of the formed graphite framework include calcination temperature and calcination duration. Generally, the higher the temperature and the longer the time, the better the morphology of the card house structure and the higher the graphitization degree. The calcination temperature preferably ranges from 2000 °C to 3300 °C, more preferably ranges from 2400 °C to 3000 °C. The calcination duration is at least 1 hour, and preferably 2 hours to 20 hours considering the sufficiency of the formation of the card house structure and the preparation efficiency.

If the temperature is lower than 2000 °C, it is difficult for the non-carbon elements in the carbide precursor to fully escape, and a fully grown card house structure cannot be formed, only a few pits are formed on the surface of the carbide particles; with the increase of the calcination temperature, the card house structure is easier to form and the graphite framework will have higher graphitization degree. However, if it is higher than 3300 °C, the preparing process will be difficult to operate.

Generally, with the increase of calcination duration, the obtained graphite will also obtain a more obvious card house structure and a higher graphitization degree. If the calcination duration is less than 1 hour, it is usually impossible to form a well-developed card house structure. If the calcination duration is too long, the preparation efficiency will be reduced.

The types of the carbides in the present disclosure are not limited, and suitable carbides can be selected according to the treatment method, and silicon carbide, aluminum carbide, iron carbide, calcium carbide, molybdenum carbide, titanium aluminum carbide and titanium silicon carbide are preferably used for high-temperature calcination.

The method of attaching the silicon particles into the graphite framework can be a mechanical mixing method or an in-situ growth method.

In the case of mechanical mixing, dry mixing or wet mixing can be used, specifically, mixing can be carried out by stirring, grinding, ball milling, ultrasonic dispersion, etc.

As a preferred embodiment, the silicon particles and the graphite framework material obtained in step 2 can be put into a ball mill in a certain proportion and mixed, and the mixed material is taken out to obtain a uniform silicon-carbon negative electrode material. The mass ratio of silicon to graphite is preferably 1:0.5 to 1: 50, the rotation speed of the ball milling tank can be set at 200 rpm to 500 rpm, and the ball milling duration is 10 min to 30 min.

In order to facilitate the dispersion of the silicon particles in the graphite framework, it is preferable to use dispersant and solvent during mechanical mixing. The dispersant preferably includes at least one selected from the group consisting of cetyltrimethyl ammonium bromide, polyvinylpyrrolidone, polyethylene glycol, sodium carboxymethyl cellulose, triton and sodium dodecyl sulfonate. The solvent preferably includes at least one selected from the group consisting of water, ethanol, isopropanol, ethylene glycol, acetone and N-methylpyrrolidone.

As the attachment method of in-situ growth, vapor deposition method, metal thermal reduction method or other commonly used in-situ growth methods can be considered.

In the case of vapor deposition, silicon-containing gas is introduced into the furnace as silicon raw material, which is fully mixed with the graphite framework material in the furnace and reacts at a certain temperature to generate nano-silicon. The final product is a composite of graphite and silicon. The reaction temperature ranges from 400 °C to 1600 °C and the reaction duration ranges from 10 min to 100 h.

The silicon-containing gas includes but is not limited to one or more selected from of the group consisting of silane, monochlorosilane, dichlorosilane, trichlorosilane, silicon tetrachloride, trichloromethylsilane, silicon tetrafluoride, etc.

In the case of metal thermal reduction, silicon dioxide is grown on the surface of sheet-like crystals and cavities of the graphite framework by precipitation, impregnation and hydrolysis of silicon-containing raw materials. Then the material and reducing metal are reduced in inert atmosphere. The reaction temperature is usually 600 °C to 700 °C.

Reducing metals include at least one selected from the group consisting of magnesium, aluminum, sodium, potassium, etc.

After obtaining the silicon-carbon negative electrode material with graphite derived from the card house structure as the framework material, the present disclosure further includes step 4: preparing a negative electrode plate, and mixing the silicon-carbon negative electrode material as obtained with a binder and a conductive agent in a mass ratio of 90:5:5 to prepare slurry, the binder is preferably sodium carboxymethyl cellulose and styrene-butadiene rubber; the conductive agent is preferably acetylene black. The stirred slurry is coated on copper foil, and the coating thickness of wet film ranges from 200 µm to 800 µm, and then dried to make the negative electrode plate.

Furthermore, the negative electrode plate can be used to obtain a lithium ion battery with the silicon-carbon negative electrode material of the present disclosure.

According to the present disclosure, a negative electrode material bearing silicon particles with a graphite framework with a three-dimensional card house structure can be formed, and further a negative electrode and a lithium ion battery with high gram capacity and good cycling stability can be prepared.

The present disclosure will be further described with reference to specific embodiments.

In the following embodiments and comparative examples, unless otherwise specified, the particle diameters are all median particle diameters (D50).

### <Embodiment 1>

50 g of coarse silicon carbide was ground to powder with a particle size of 20 µm.

The ground silicon carbide powder was calcined in a vacuum electric furnace at 2600 °C for 2 h, and the graphite framework material was obtained.

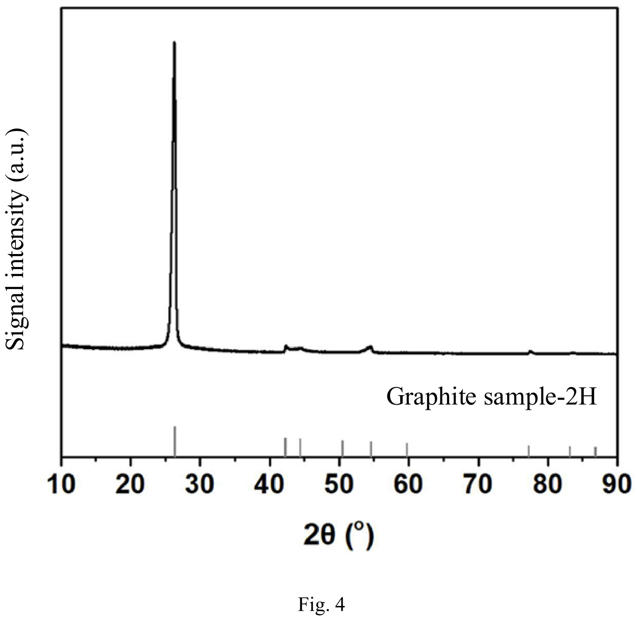

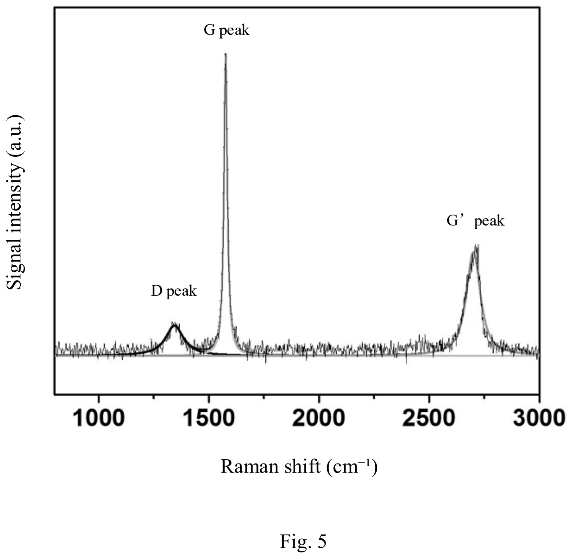

Observed under scanning electron microscope, its microstructure is shown in Fig. 2. The cavities diameter distribution of the sample was analyzed by scanning electron microscope and Nano Measure software, and the average cavity diameter was 632.4 nm. The obtained material was tested by X-ray diffractometer (XRD), and the spectrogram was as shown in Fig. 4. The calculated graphitization degree was 78.2%. Its structure was verified by Raman spectrometer, and the Raman spectrum was as shown in Fig. 5, which was confirmed to be graphite particles.

Weighing 8 g of the obtained graphite framework material, ball milling with 2 g of silicon powder with a particle size of 500 nm, 0.5 g of polyvinylpyrrolidone and 200 ml of ethanol at a rotation speed of 300 rpm; the ball milling duration is 20 min.

Drying the ball-milled material to obtain the silicon-carbon negative electrode material.

The obtained negative electrode material, sodium carboxymethylcellulose (CMC), styrene-butadiene rubber solution (SBR) and conductive carbon black (Super P) were prepared into slurry in the mass ratio of 90:2:3:5, which was coated on the surface of copper current collector and dried to make a 12 mm diameter electrode plate.

The electrode plate and the lithium plate are assembled into a button cell, and the adopted diaphragm is Celgard 2400; the electrolyte is 1 mol/L LiPF6 solution (the solvent is a mixture of vinyl carbonate, dimethyl carbonate and diethyl carbonate with a volume ratio of 1:1:1); the battery was tested for constant current charge and discharge in the range of 0 V to 1.5 V, with a voltage range of 0 V to 1.5 V and a current density of 0.1 C. Gram capacity and 500 cycle capacity retention rate were measured respectively.

### <Embodiment 2>

50 g of silicon carbide coarse material was ground to powder with a particle size of 20 µm.

The ground silicon carbide powder was calcined in a vacuum electric furnace at 2800°C for 6 h, and the graphite framework material was obtained.

The calcined material was observed, analyzed and measured by electron microscope, and it was confirmed that the card house structure was formed. The average cavity diameter was 702.8 nm and the graphitization degree was 82.1%. The method of observation and the method of analysis and measurement are the same as those of the embodiment 1.

Weighing 8 g of the obtained graphite material, stirring and mixing with 2 g of silicon powder with a particle size of 150 nm, 0.1 g of sodium carboxymethyl cellulose, 100 ml of ethanol and 100 ml of deionized water; the mixing duration is 2 h.

The process of manufacturing the electrode plate and performance evaluation are the same as those of the embodiment 1.

### <Embodiment 3>

500 g of aluminum carbide coarse material was ground to powder with a particle size of 10 µm.

The ground aluminum carbide powder was calcined in a vacuum electric furnace at 2400°C for 20 h to obtain the graphite framework material.

The calcined material was observed, analyzed and measured by electron microscope, and it was confirmed that it forms a "card house structure", with an average cavity diameter of 412.6 nm and a graphitization degree of 77.5%. The method of observation and the method of analysis and measurement are the same as those of the embodiment 1.

Weighing 18 g of the obtained graphite material, and ball milling with 2 g of silicon powder with a particle size of 150 nm, 0.5 g of polyethylene glycol, 200 ml of ethanol and 200 ml of deionized water at a rotation speed of 500 rpm; the ball milling duration is 10 min.

The process of manufacturing the electrode plate and performance evaluation are the same as those of the embodiment 1.

### <Embodiment 4>

100 g of titanium aluminum carbide coarse material was ground to powder with a particle size of 50 µm.

The ground titanium carbide aluminum powder was calcined in a vacuum electric furnace at 2400°C for 20 h to obtain the graphite framework material.

The calcined material was observed, analyzed and measured by electron microscope, and it was confirmed that it formed a "card house structure", with an average cavity diameter of 488.0 nm and a graphitization degree of 76.2%. The method of observation and the method of analysis and measurement are the same as those of the embodiment 1.

Grinding the graphite framework material to 15 µm; weighing 5 g of ground graphite framework material, and ball milling with 5 g of silicon powder with particle size of 100 nm, 0.5 g of polyvinylpyrrolidone, 350 ml of ethanol and 50 ml of N-methylpyrrolidone at the rotating speed of 200 rpm; the ball milling duration is 30 min.

The process of manufacturing the electrode plate and performance evaluation are the same as those of the embodiment 1.

### < Embodiment 5>

20 g of silicon carbide coarse material was ground to powder with a particle size of 20 µm.

The ground silicon carbide powder was calcined in a vacuum electric furnace at 2800 °C for 6 h to obtain graphite framework material.

The calcined material was observed, analyzed and measured by electron microscope, and it was confirmed that it forms a "card house structure", with an average cavity diameter of 692.6 nm and a graphitization degree of 82.1%. The method of observation and the method of analysis and measurement are the same as those of the embodiment 1.

Weighing 2 g of the obtained graphite framework material, mix it with 8 g of silicon powder with particle size of 100 nm, 0.1 g of sodium dodecyl sulfonate and 200 ml of ethanol by ultrasonic machine for 30 min.

The process of manufacturing the electrode plate and the performance evaluation are the same as those of the embodiment 1.

### < Embodiment 6>

50 g of silicon carbide coarse material was ground to powder with a particle size of 20 µm.

The ground silicon carbide powder was calcined in a vacuum electric furnace at 2600 °C for 2 h to obtain graphite framework material.

The calcined material was observed, analyzed and measured by electron microscope, and it was confirmed that a "card house structure" was formed, with an average cavity diameter of 628.1 nm and a graphitization degree of 78.2%. The method of observation and the method of analysis and measurement are the same as those of the embodiment 1.

Weighing 4 g of the obtained graphite framework material, placing it in a tube furnace, introducing argon gas, slowly raising the temperature to 1000 °C, and keeping the temperature at 1000 °C for 1 h;

Introducing trichlorosilane gas into the tube furnace for 5 h at a constant temperature of 1000 °C. Naturally cooling after the reaction, and taking out the materials.

The process of manufacturing the electrode plate and performance evaluation are the same as those of the embodiment 1.

### < Embodiment 7>

50 g of silicon carbide coarse material was ground to powder with a particle size of 30 µm.

The ground silicon carbide powder was calcined in a vacuum electric furnace at 2200 °C for 72 h, and the graphite framework material was obtained.

The calcined material was observed, analyzed and measured by electron microscope, and it was confirmed that a "card house structure" was formed, with an average cavity diameter of 492.0 nm and a graphitization degree of 76.2%. The method of observation and the method of analysis and measurement are the same as those of the embodiment 1.

Weighing 8 g of the obtained graphite framework material, and ball-milling with 2 g of silicon powder with a particle size of 100 nm, 0.5 g of polyethylene glycol and 200 ml of isopropanol at a rotation speed of 300 rpm; the ball milling duration is 20 min.

Drying the ball-milled material to obtain the silicon-carbon negative electrode material.

The process of manufacturing the electrode plate and performance evaluation are the same as those of the embodiment 1.

### <Embodiment 8 >

50 g of silicon carbide coarse material was ground to powder with a particle size of 5 µm.

The ground silicon carbide powder was calcined in a vacuum electric furnace at 2300 °C for 48 h, and the graphite framework material was obtained.

The calcined material was observed, analyzed and measured by electron microscope, and it was confirmed that a "card house structure" was formed, with an average cavity diameter of 603.3 nm and a graphitization degree of 77.1%. The method of observation and the method of analysis measurement are the same as those of the embodiment 1.

Weighing 18 g of the obtained graphite framework material, and ball milling with 2 g of silicon powder with a particle size of 150 nm, 0.5 g of polyethylene glycol and 500 ml of ethanol; the rotating speed is 500 rpm; the ball milling duration is 10 min.

The process of manufacturing the electrode plate and performance evaluation are the same as those of the embodiment 1.

### <Comparative example 1>

8 g of natural graphite was ground to powder with a particle size of 20 µm.

2 g of silicon powder with a particle size of 500 nm was ball-milled with the obtained natural graphite powder, 0.5 g of polyvinylpyrrolidone and 200 ml of ethanol at a rotation speed of 300 rpm; the ball milling duration is 20 min.

The process of manufacturing the electrode plate and performance evaluation are the same as those of the embodiment 1.

### < Comparative example 2>

9 g of artificial spherical graphite (D50=16 µm) was ball-milled with 1 g of nano-silicon with a particle size of 150nm, 0.5 g of polyethylene glycol, 200 ml of ethanol and 200 ml of deionized water at a speed of 500 rpm. The ball milling duration is 10 min.

The process of manufacturing the electrode plate and performance evaluation are the same as those of the embodiment 1.

### <Comparative example 3>

2 g of artificial spherical graphite (D50=16 µm) was mixed with 8 g of nano-silicon with a particle size of 100nm, 0.1 g of sodium dodecyl sulfonate and 200 ml of ethanol by ultrasonic for 30 min.

The process of manufacturing the electrode plate and performance evaluation are the same as thoseof the embodiment 1.

### <Comparative example 4>

5g of flake graphite, 5 g of nano-silicon with a particle size of 100nm, 0.5 g of polyvinylpyrrolidone, 350 ml of ethanol and 50 ml of N-methylpyrrolidone were ball-milled at 200 rpm; the ball milling duration is 30 min.

The process of manufacturing the electrode plate and performance evaluation are the same as those of the embodiment 1.

The raw materials and preparation conditions used in the embodiments and comparative examples are shown in Table 1.

**[Table 1]**

| Sample | Graphite material | Silicon particles | Preparing conditions for Graphite framework material | | |
|---|---|---|---|---|---|
| | | | Raw material | Calcination temperature | Calcination duration |
| Embodiment 1 | Graphite framework having a card house structure 8g | 2g, 500 nm | Silicon carbide | 2600°C | 2h |
| Embodiment 2 | Graphite framework having a card house structure 8g | 2g, 150 nm | Silicon carbide | 2800 °C | 6h |
| Embodiment 3 | Graphite framework having a card house structure 18g | 2g, 150 nm | Aluminum carbide | 2400°C | 20 h |
| Embodiment 4 | Graphite framework having a card house structure 5g | 5 g, 100 nm | Titanium Aluminum Carbide | 2400°C | 20 h |
| Embodiment 5 | Graphite framework having a card house structure 2g | 8 g, 100 nm | Silicon carbide | 2800°C | 6h |
| Embodiment 6 | Graphite framework having a card house structure 4g | 20 - 200 nm Si via vapor deposition, 1 g | Silicon carbide | 2600°C | 2h |
| Embodiment 7 | Graphite framework having a card house structure 8g | 2g, 100nm | Silicon carbide | 2200 °C | 72h |
| Embodiment 8 | Graphite framework having a card house structure 18g | 2g, 150nm | Silicon carbide | 2300 °C | 48 h |
| Comparative example1 | Natural graphite 8g | 2 g, 500 nm | Commercially available | | |
| Comparative example 2 | Artificial spherical graphite 9g | 1g, 150 nm | Commercially available | | |
| Comparative example 3 | Artificial spherical graphite 2 g | 8g, 100 nm | Commercially available | | |
| Comparative example 4 | Flake graphite 5 g | 5g, 100nm | Commercially available | | |

The battery performance test results of the embodiments and comparative examples are shown in Table 2.

**[Table 2]**

| Sample | Silicon Content | Gram Capacity (mAh/g) | 500-Cycle Capacity Retention (%) |
|---|---|---|---|
| Embodiment 1 | 20% | 838 | 72.2 |
| Embodiment 2 | 20% | 835 | 78.8 |
| Embodiment 3 | 10% | 614 | 89.2 |
| Embodiment 4 | 50% | 1615 | 70.1 |
| Embodiment 5 | 80% | 2510 | 61.1 |
| Embodiment 6 | 20% | 851 | 86.1 |
| Embodiment 7 | 20% | 825 | 80.1 |
| Embodiment 8 | 10% | 610 | 88.2 |
| Comparative example 1 | 20% | 835 | 54.7 |
| Comparative example 2 | 10% | 625 | 70.5 |
| Comparative example 3 | 80% | 2533 | 23.4 |
| Comparative example 4 | 50% | 1598 | 33.6 |

It can be seen from the above performance test results, according to the preparing method of the present disclosure, the graphite framework with the card house structure can be obtained by using the carbide precursor, and the silicon particles can be well accommodated by using the cavities in the card house structure.

In addition, with the increase of silicon content, the gram capacity of the electrode is gradually improved. For the comparative example using the existing graphite raw material, because the silicon particles are easy to agglomerate on the surface of graphite raw material, the 500-cycle capacity retention rate is greatly reduced, and the cycling stability of the electrode is not good. However, in the embodiments 1-8, the graphite framework with a card house structure was made from the derivative graphite formed by carbide, and the silicon particles were supported and contained by the cavities in the graphite framework with the card house structure, so that the agglomeration of the silicon particles did not occur. Even if the silicon content was as high as 80%, the 500-cycle capacity retention rate remained at a good level.

Various embodiments of the present disclosure have been described above. The above-mentioned embodiments are only examples, and those skilled in the art can combine and change the embodiments within the scope without departing from the gist of the present disclosure.

## Claims

1. A silicon-carbon negative electrode material, **characterized in that**:
the silicon-carbon negative electrode material comprises a graphite framework and silicon particles,
the graphite framework has a card house structure comprising cavities, and the silicon particles are contained in the cavities of the graphite framework.

2. The silicon-carbon negative electrode material according to claim 1, **characterized in that**, an average pore size of the cavities formed by the graphite framework ranges from 5 nm to 2000 nm,
preferably, the average pore size of the cavities formed by the graphite framework ranges from 30 nm to 500 nm.

3. The silicon-carbon negative electrode material according to claim 1 or 2, **characterized in that**, a median particle diameter of the silicon particles ranges from 1 nm to 500 nm,
preferably, the median particle diameter of the silicon particles ranges from 20 nm to 200 nm, and more preferably, the median particle diameter of the silicon particles ranges from 50 nm to 200 nm.

4. The silicon-carbon negative electrode material according to claim 1, **characterized in that**, the silicon particles account for 1%-80% of a total mass of the silicon-carbon negative electrode material.

5. The silicon-carbon negative electrode material according to claim 1, **characterized in that**, the graphite framework is made of derived graphite formed from carbide.

6. The silicon-carbon negative electrode material according to claim 5, **characterized in that**, the carbide comprises at least one selected from the group consisting of silicon carbide, iron carbide, calcium carbide, molybdenum carbide, aluminum carbide, titanium aluminum carbide and titanium silicon carbide.

7. A negative electrode plate, **characterized in that**: the negative electrode plate comprises the silicon-carbon negative electrode material according to any one of claims 1-6.

8. A lithium ion battery, **characterized in that**: the lithium ion battery comprises the negative electrode plate according to claim 7.

9. A preparing method of a silicon-carbon negative electrode material, **characterized in that**: the preparing method at least comprises following steps:
a calcination step: calcining a carbide to generate a graphite framework having a card house structure;
a silicon particle attachment step: attaching silicon particles into cavities of the graphite framework obtained in the calcination step to obtain the silicon-carbon negative electrode material.

10. The preparing method of the silicon-carbon negative electrode material according to claim 9,
**characterized in that**, a calcination temperature of the carbide ranges from 2000 °C to 3300 °C, and a calcination duration is at least 1h, preferably 2 h to 20 h.

11. The preparing method of the silicon-carbon negative electrode material according to claim 9, **characterized in that**, the carbide comprises at least one selected from the group consisting of silicon carbide, iron carbide, calcium carbide, molybdenum carbide, aluminum carbide, titanium aluminum carbide and titanium silicon carbide.

12. The preparing method of the silicon-carbon negative electrode material according to claim 9, **characterized in that**,
in the silicon particle attachment step, the graphite framework as obtained is mixed with the silicon particles by a mechanical method, or the silicon particles are attached to the cavities of the graphite framework by a method of in-situ growth.

13. The preparing method of the silicon-carbon negative electrode material according to claim 9, wherein the silicon particles account for 1% to 80% of a total mass of the silicon-carbon negative electrode material.
